# EUROPEAN PATENT APPLICATION

(11) **EP 2 439 748 A1**
(43) Date of publication of application: **11.04.2012**
(21) Application number: 10186454.4
(22) Date of filing: 04.10.2010
(51) Int. Cl.: G21K 1/00

(54) **Method of manipulating a biological object and optical manipulator**

(71) Applicant: CellTool GmbH, 82327 Tutzing (DE)
(72) Inventor: Schütze, Raimund, 8232, Tutzing (DE); Schütze, Karin, 82327 Tutzing (DE)
(74) Representative: Meier, Florian

(57) **Abstract**

A method and device for manipulating a biological object (36) are provided. The biological object (36) is positioned at a distance from a reflecting surface (39). A beam (33) of electromagnetic radiation is directed towards the reflecting surface (39) such that the beam (33) impinges on a first face of the biological object (36) and that at least a portion of the beam (33) is reflected by the reflecting surface (39) into a reflected beam (35) which directly impinges on a second face of the biological object (36). The beam (33) directed towards the reflecting surface (39) is adjusted to effect a deformation or rotation of the biological object (36).

## Description

### FIELD OF THE INVENTION

The invention relates to a method of manipulating a biological object and to an optical manipulator. The invention relates in particular to such a method and manipulator which allows a user to place a stimulus on the biological object without requiring a solid member to mechanically interact with the biological object.

### BACKGROUND OF THE INVENTION

Optical tools are now widely used in biological and medical applications in order to characterize and/or identify cells. Examples include the analysis of mechanical properties of cells in order to characterize cells. The results of such a cell characterization may be utilized for applications such as cell sorting for diagnosis or therapy, or similar. As optical tools for cell characterization and sorting are increasingly widely used, there is an increasing need in the art to perform such acts in a fast and reliable way. This makes it increasingly desirable to manipulate biological objects in a manner which does not require the biological objects to mechanically interact with solid components of a manipulation device. Further, it is desirable that the techniques used to manipulate the cells or other biological objects are such that they allow plural biological cells to be manipulated, characterized or identified in parallel.

An example for an optical tool which is now widely used in the analysis of biological objects is an optical trap, or optical tweezer(s). An optical tweezer allows a biological object to be positioned at a desired location, which may be beneficial for observing the biological object over extended periods of time. However, for various applications, including applications aiming at exploring mechanical properties of a biological object, it may not be sufficient to merely position the biological object at a desired location.

It is also conceivable to use optical tools in order to explore mechanical properties of biological objects. Such optical tools may rely on the presence of counterpropagating beams of electromagnetic radiation. However, there are certain limitations associated with various configurations which can generate such counterpropagating beams. For illustration, tools which rely on plural optical fibres to irradiate one biological object with laser light may require considerable installation time and may suffer from problems associated with mechanical detachment of the optical fibres. Further, such tools may be limited in that they require one pair of optical fibres to manipulate one biological object. For practical applications, it may be desirable to implement optical manipulation of biological objects in a manner which allows the manipulation to be multiplexed in the sense that plural biological objects can be individually addressed and manipulated. Further, tools which rely on optical fibres for manipulating biological objects may not be readily adaptable to different object sizes. For illustration, the diameter of the optical fibres may limit the size of biological objects which can be manipulated, while optical fibres having a diameter much larger than the size of the biological object may not be capable of generating optical forces having a desired magnitude.

There is a need in the art for a method and device for manipulating a biological object. In particular, there is a need in the art for such a method and device which allow one or plural biological objects to be manipulated without requiring pairs of optical fibres to be installed. There is also a need in the art for such a method and device which does not require plural sources of light. There is also a need in the art for a method and device which can be easily adapted to manipulate biological objects having different sizes.

### BRIEF SUMMARY OF THE INVENTION

There is a continued need in the art for a method and device for manipulating a biological object which address some of the above needs.

According to an embodiment, a method of manipulating a biological object is provided. The biological object is positioned at a distance from a reflecting surface. A beam of electromagnetic radiation is directed towards the reflecting surface such that the beam impinges on a first face of the biological object and that at least a portion of the beam is reflected by the reflecting surface into a reflected beam which directly impinges on a second face of the biological object. The beam is adjusted to cause a deformation and/or rotation of the biological object.

The method utilizes a reflecting surface to generate a light field for manipulating an object. This obviates the need of providing a separate second source of electromagnetic radiation to manipulate the object. The superposition of the incident beam and the reflected beam forms a light field which allows the biological object to be deformed and/or rotated. The light field may define a double-well potential for dielectric material.

The beam may include electromagnetic radiation having a wavelength in the optical frequency range. The beam may in particular include electromagnetic radiation having a wavelength in the IR-part of the optical spectrum. The beam may in particular include electromagnetic radiation having a wavelength in the near IR-part of the optical spectrum. The beam may alternatively or additionally include electromagnetic radiation having a wavelength in the visible part of the optical spectrum.

The first face and the second face of the biological object may be opposite to each other. In an embodiment, the first and second faces may be spaced along an axis of the incident beam. This allows the biological object to be extended or compressed along this axis.

A power density of the beam may be selected such that the biological object is manipulated, by the superposition of the incident and reflected beams, in a nondestructive manner. The power density of the beam may be controlled such that the biological object is non-destructively manipulated even when the power density of the beam is adjusted.

In the method, adjusting the beam may comprise adjusting a power density of the beam. By adjusting the power density, forces exerted on the first face and the second face of the biological object may be controlled. For illustration, the radiation pressure exerted by the incident beam onto the first face of the biological object and the radiation pressure exerted by the reflected beam onto the second face of the biological object may be controlled thereby.

The power density of the beam may be increased in a power density ramp. Thereby, a power density which gives rise to a mechanical deformation may be identified. The power ramp may be adjusted such that an optimum power density at which a desired deformation is attained is identified.

In an embodiment, the biological object may be compressed or extended along the axis of the incident beam. The biological object may have a maximum diameter along the axis of the beam when the beam has a first power density, and the power density of the beam may be adjusted to a second power density different from the first power density to change the maximum diameter along the axis of the incident beam.

The beam incident onto the reflecting surface may be a convergent or divergent beam. An opening angle of the conical or frustoconical beam envelope may be selected based on a size of the biological object to be manipulated and/or based on characteristics, such as a diameter or a focal length, of a lens through which the incident beam is passed. A focus adjusting device may be provided to selectively adjust the opening angle of the incident beam. Alternatively or additionally, the opening angle of the conical or frustoconical beam envelope may be adjusted as a function of time, in particular in a cyclic manner, in order to manipulate the object.

The beam incident onto the reflecting may be convergent. A distance of the focal point of the incident beam from the reflecting surface may be adjusted. Thereby, the manipulation can be easily adapted to different object sizes.

In an embodiment, a medium surrounding the biological object may be selected to have a refractive index different from that of an interior of the biological object. The medium surrounding the biological object may be selected such that the refractive index of the medium surrounding the biological object is smaller than the refractive index of the interior of the biological object. Thereby, the force exerted onto the first face and the second face may be directed outwardly of the biological object, causing the diameter of the biological object along the propagation direction of the incident beam to increase as the power density of the beam is increased.

The beam may include plural components, which may be distinguished from each other with regard to their wavelength and/or polarization. Adjusting the beam may comprise selectively and individually displacing the various components relative to each other. For illustration, at least one polarization component may be displaced in a direction perpendicular to the propagation direction of the beam, i.e., in the lateral direction, and relative to at least one other polarization component of the beam. The at least one polarization component may be controllable so as to be individually and selectively displaced in both directions perpendicular to the beam propagation direction. Alternatively or additionally, the longitudinal positions of the foci of the two polarization components measured along the beam propagation direction may be adjusted relative to each other. In further embodiments, the beam may be passed through a beam splitter and the two resultant beams may be controlled independently of each other, and the two resultant beams do not necessarily have to be distinguished with regard to their wavelength and/or polarization. Thereby, one single source of electromagnetic radiation, e.g. a single laser, may be used to manipulate one biological object or plural biological objects in a variety of fashions, such as by deformation, by displacement, and/or by rotation.

The beam may be passed through a polarization splitter. In order to adjust the beam, a first polarization component and a second polarization component of the beam may be selectively and individually adjusted, the second polarization component being different from the first polarization component. Thereby, one single source of electromagnetic radiation, e.g. a single laser, may be used to manipulate one biological object or plural biological objects in a variety of fashions, such as by deformation, by displacement, and/or by rotation.

When the beam has two components distinguished with regard to wavelength and/or polarization, the reflecting surface may be such that it selectively reflects a first component while allowing at least 50% of the power flux of the second component to be transmitted through the reflecting surface. In an embodiment, the reflecting surface may be such that it selectively transmits essentially all of the power flux of the second component. The reflectivity of the reflecting surface for the second component may be altered as a function of time, for example by adjusting the angle between a normal of the reflecting surface and a beam axis of an incident beam as a function of time. Alternatively, the reflecting surface may include a controllable element, such as an electrically switchable polarization filter. Thereby, the resulting light field may be tailored to attain a desired manipulation of the biological object.

The first polarization component in the beam directed towards the reflecting surface and the first polarization component in the reflected beam may form a first optical trap or a first pair of optical traps. The second polarization component in the beam directed towards the reflecting surface and the second polarization component in the reflected beam may form a second optical trap or a second pair of optical traps. The first and second polarization components may be controlled such that a relative position between a centre of the first optical trap and a centre of the second optical trap is adjusted as a function of time. Thereby, a double-trap potential may be generated which is adjusted to cause the biological object to deform or rotation in a controlled fashion, as dictated by the relative position of the first and second optical traps. If there is a first pair of optical traps and a second pair of optical traps, the first pair and second pair of traps may be displaced relative to each other, without necessarily adjusting the distance between the traps of the first pair or the distance between the traps of the second pair.

The first and second polarization components may be controlled such that the biological object remains positioned in both the first optical trap and the second optical trap while the relative position of the traps is adjusted. This allows the biological object to be performed or rotated in a continuous and reliable manner.

The first and second polarization components may be controlled such that a distance between the centre of the first optical trap and a centre of the second optical trap is smaller than a maximum diameter of the biological object.

The reflecting surface may be integrated into a microfluidic device defining at least one micro channel. Thereby, contact-free optical manipulation may be combined with transporting biological objects, such as cells, to a location where the biological object is manipulated. The biological object may be automatically sorted, using the microfluidic device, under the control of a computer system and based on a response of the biological object to a stimulus. Automatic sorting or automatic classification may include comparing, by a computer, a response of the biological object to a stimulus to data included in a data base.

The microfluidic device may be configured to supply an active ingredient, such as a pharmaceutically active ingredient, to the biological object. The method may include adjusting the beam in order to cause deformation of the object and/or to cause the object to rotate. Deformation or rotation of the object by adjusting the laser beam may be performed before the biological object is exposed to the active ingredient, simultaneously with exposing the biological object to the active ingredient, and/or after the biological object has been exposed to the active ingredient.

The biological object may be immersed in a solution contained within the micro channel. A refractive index of the solution may be different from, in particular smaller than, a refractive index of the biological object. Thereby, a force can be exerted onto the faces of the biological object which is directed in an outward direction of the biological object.

The reflecting surface may have a symmetry axis extending perpendicularly to at least a portion of the reflecting surface, and the incident beam directed towards the reflecting surface may have a propagation direction arranged at an angle relative to the symmetry axis. I.e., the axis of incidence of the incident beam may enclose an angle greater than 0° and smaller than 180° with the symmetry axis of the reflecting surface. Thereby, back reflection and back scattering of light into a laser system may be decreased. Further, if the incident beam is also used as excitation beam for Raman spectroscopy, back reflection into a Raman spectrometer may be reduced.

The reflecting surface may be curved to focus the reflected beam onto the biological object. Thereby, power density at the biological object, and thus the resulting forces, may be enhanced. The reflecting surface may have a cross section, taken in a plane which includes a symmetry axis, which is selected from spherical, parabolic, elliptic, or hyperbol ic.

The reflecting surface may also be planar. The incident beam may be converging. An opening angle of the frustoconical surface defined by the envelope of the incident beam may be selected based on the distance at which the biological object is positioned from the surface. One planar reflecting surface may be used to manipulate plural biological objects in parallel. The plural biological objects may be spaced along a longitudinal axis of a micro channel of a microfluidic device or may be positioned in separate micro channels of the microfluidic device.

The method according to various embodiments is configured such that it can be readily multiplexed in the sense that it can be applied to plural biological objects in parallel. To this end, a spatial light modulator may be used. The incident beam and at least one further incident beam may be provided by the spatial light modulator. In an embodiment, the incident beam and the at least one further incident beam may be directed onto the same reflecting surface. Alternatively or additionally, a plurality of reflecting surfaces may be provided. Each one of the reflecting surfaces may be a focusing reflector. Each one of a plurality of beams provided by the spatial light modulator may be directed to one of the plurality of reflecting surfaces. Thereby, plural biological objects may be manipulated in parallel.

When several biological objects are manipulated in parallel, the different beams used for manipulating the plural objects may be directed towards one reflecting surface.

According to various embodiments, the beam is not passed through an optical fibre as it is directed towards the reflecting surface. For illustration, the beam may be coupled into the beam path of a microscope. For further illustration, the beam may be coupled into a channel of a micro fluidic device.

Various optical modes may be utilized in the beam. According to embodiments, the beam may include at least one TEM_{xy}-mode with at least one of x and y being greater than 0. According to embodiments, the beam includes at least one of a TEM₀₁ mode and a TEM₁₀ mode. Using such modes allows the beam to be tailored to the specific application, so as to effect that opposing forces are exerted onto the first and second faces of the biological object or that a torque is exerted onto the biological object.

A response of the biological object to the forces exerted thereon in the light field generated by the incident and reflected beams may be monitored. The response may be monitored using digital holographic micro-interferometry and/or Raman spectroscopy. The incident beam may have a tuneable wavelength. The incident beam may be utilized to both exert forces onto the biological object and as excitation beam for Raman spectroscopy. To monitor the response, a signal captured prior to manipulation of the biological object and at least one additional signal captured during or subsequent to manipulation of the biological object may be acquired. The two signals may be compared. A result of the comparison may be automatically matched to entries in a data base. At least one microfluidic actuator may be controlled in response to a result of the matching.

According to another embodiment, an optical manipulator device for manipulating a biological object is provided. The device comprises a reflecting surface and a source of electromagnetic radiation configured to direct the beam of electromagnetic radiation towards the reflecting surface such that the beam impinges on a first face of the biological object when the biological object is positioned at a distance from the reflecting surface and that at least a portion of the beam is reflected by the reflecting surface into a reflected beam directly impinging on a second face of the biological object. The device further comprises a control device coupled to the source of electromagnetic radiation and configured to control the source of electromagnetic radiation so as to adjust the beam to cause deformation or rotation of the biological object.

The optical manipulator device utilizes a reflecting surface to generate a light field for manipulating an object. This obviates the need of providing a separate second source of electromagnetic radiation to manipulate the object. The optical manipulator device is configured such that the superposition of the incident beam and the reflected beam forms a light field which allows the biological object to be deformed and/or rotated.

The optical manipulator device may include a microfluidic chip. In any one of the embodiments or aspects, the reflecting surface may be integrated into the microfluidic chip.

The optical manipulator device may include a source of electromagnetic radiation to generate the beam. The source of electromagnetic radiation may include a laser. The laser may have a wavelength in the optical frequency range. The laser may in particular have a wavelength in the IR-part of the optical spectrum. The laser may in particular have a wavelength in the near IR-part of the optical spectrum.

The optical manipulator device may include a polarization splitter or another beam splitter.

The optical manipulator device may further include an adjusting device for selectively displacing, in a direction perpendicular to the propagation direction of the beam, at least one polarization component of the beam relative to at least another polarization component of the beam. Alternatively or additionally, the optical manipulator device may include an adjusting device for adjusting a power density of the incident beam.

The optical manipulator device may be configured to adjust an opening angle of the outer envelope of the light beam incident onto the reflecting surface. The optical manipulator device may include a device for setting a position of a focal point of the light beam incident onto the reflecting surface relative to the reflecting surface. The optical manipulator device may be configured to set the position of the focal point based on the biological object to be manipulated.

The optical manipulator device may further include a spatial light modulator. The spatial light modulator may be configured to generate the beam incident onto the reflecting surface and at least one further incident beam. As has been explained in the context of the method according to embodiments, plural beams may be directed so as to be incident on one reflecting surface, or a plurality of reflecting surfaces may be provided on which the plural beams are incident. Thereby, plural biological objects may be manipulated in parallel. The plurality of reflecting surfaces may be arranged in an array.

The optical manipulator device may include a device for performing a digital holographic micro-interferometry on the biological object. Alternatively or additionally, the optical manipulator device may include a Raman spectrometer. The optical manipulator device may include a computing device coupled to the device for performing a digital holographic micro-interferometry and/or to the Raman spectrometer, so that a response of the biological object to the optical manipulation is monitored using digital holographic micro-interferometry and/or to the Raman spectroscopy.

The optical manipulator device may include a computing device having a graphical user interface, which allows a user to control operation of the optical manipulator device.

The optical manipulator device may be configured to perform the method of any one aspect or embodiment.

According to another embodiment, a microscope is provided which includes the optical manipulator of an embodiment.

The methods and devices according to embodiments may be utilized to manipulate a wide variety of biological objects. Examples include cells, viruses, bacteria, DNA molecules, or protein molecules, without being limited thereto.

Embodiments of the invention will be described with reference to the accompanying drawings.
Fig. 1 is schematic diagram of an optical manipulator device according to an embodiment.
Figs. 2 and 3 illustrate manipulation of a biological object using a method according to an embodiment.
Fig. 4 illustrates manipulation of a biological object using a method according to another embodiment.
Fig. 5 illustrates manipulation of a biological object using a method according to another embodiment.
Fig. 6 illustrates manipulation of a biological object using a method according to another embodiment.
Fig. 7 is schematic diagram of an optical manipulator device according to another embodiment.
Figs. 8 and 9 illustrate manipulation of a biological object using a method according to another embodiment.
Fig. 10 illustrates a variant of a construction of optical manipulator devices according to embodiments.
Fig. 11 illustrates an optical manipulator device according to another embodiment.
Fig. 12 illustrates manipulation of a cell using a method according to an embodiment.
Figs. 13 and 14 illustrate manipulation of a cell using a method according to an embodiment.

Exemplary embodiments of the invention will be described with reference to the drawings. While some embodiments will be described in the context of specific fields of application, such as in the context of cell sorting, the embodiments are not limited to this specific field of application. The features of the various embodiments may be combined with each other unless specifically stated otherwise.

According to embodiments, a reflecting surface is provided. The light field generated by a beam incident on the reflecting surface and a reflected beam is used to manipulate a biological object arranged at a distance from the reflecting surface. The reflected beam impinges directly on the biological object. As used herein, "impinging directly" or similar expressions refer to a situation in which the reflected beam is not passed through an optical element, such as a mirror or similar, prior to impinging onto the biological object, after it has been reflected at the reflecting surface. In all embodiments, the reflecting surface may have dichroic properties, so as to allow an observation light beam to pass therethrough.

According to embodiments, a biological object is manipulated so as to cause a deformation of the biological object. As used in this context, the term "deformation" does not only refer to a change in configuration from a rest configuration of the biological object to a new configuration which is attained by increasing forces acting onto the object, but also the relaxation which results when forces acting onto the object are decreased in magnitude.

In the context of some embodiments, diverging or converging incident beams and reflected beams will be described. For such beams, the centre line of the beam cone will be referred to as "propagation direction" or "beam axis" of the respective beam.

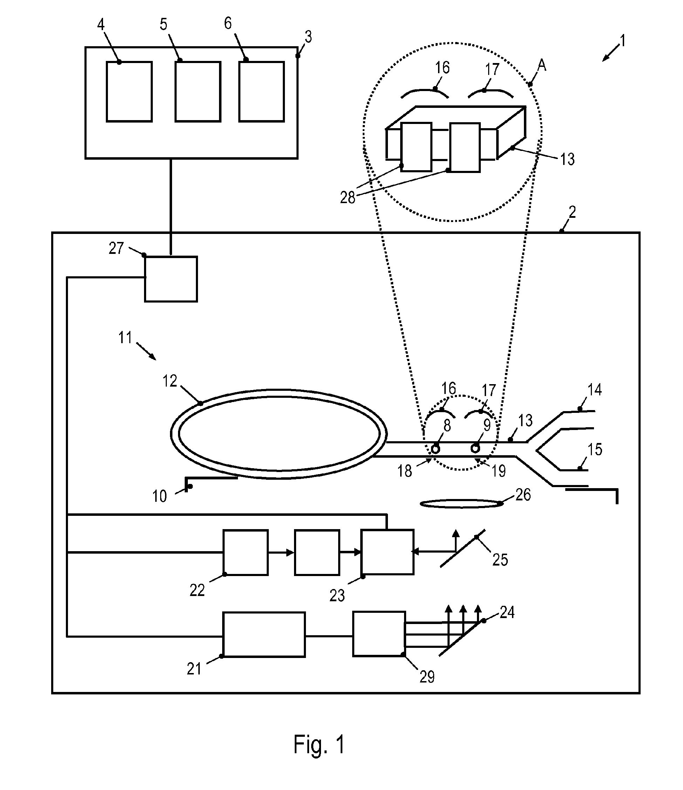

Fig. 1 is a schematic view of an optical manipulator device 1 according to an embodiment. The optical manipulator device 1 includes a microscope arrangement 2 and a computing device 3. The computing device 3 provides a control means 4 for controlling components of the microscope arrangement 2, a database 5 storing reference values for a response of various types of biological objects to a stimulus of a given type, such as compression of the biological object, and a user interface 6. The user interface 6 allows the user to control operation of the optical manipulator device 1.

The microscope arrangement 2 includes a support 10 which, in use, supports a microfluidic device 11. The microfluidic device 11 has a plurality of channels. For illustration, the microfluidic device 11 is shown to have a loop-type channel 12 in which biological objects may be kept in solution, a test channel 13 in which the biological objects 8, 9 are positioned at measurement locations 18, 19 for exerting a stimulus onto the biological objects 8, 9 and for observing a response of the biological objects 8, 9, and two outlet channels 14 and 15. Microfluidic actuators, which may include micropumps, microvalves, and similar, may be provided and may be controlled by the computing device 3 via an interface 27. In a mode of operation according to an exemplary embodiment, a circulating flow is maintained in the channel 12. Thereby, sedimentation of biological objects may be reduced.

When a measurement is to be performed, one or plural biological objects are transferred from the loop-type channel 12 into the test channel 13 for measurement. After a characterization has been performed on a biological object 8, 9, it may selectively be transferred to one of the outlet channels 14 and 15, depending on a result of the characterization. While not shown in Fig. 1, the microfluidic device may also be configured to supply an active ingredient, for example a pharmaceutically active ingredient, to the biological object. For illustration, the channel 13 may have an inlet port for supplying an active ingredient to the biological objects 8, 9 in the channel 13.

In embodiments, microfluidic techniques may be used to transport and, optionally, hold the biological object(s) in a center of the measurement channel 13. Techniques, such as microfluidic focussing, may be employed to position and controllably transport the biological object(s). In embodiments, the biological object(s) may be positioned at the measurement location(s) using microfluidic techniques. Plural biological objects may be positioned such that they are arranged along the longitudinal axis of the measurement channel 13 so as to be spaced from each other. The microfluidic actuators may be configured to advance one or several biological object(s) in a stepwise fashion.

For illustration rather than limitation, if the biological objects are cells, forces may be exerted onto the cells when placed in the test channel 13. The forces may be exerted using the light field generated by a beam incident on a reflecting surface and the reflected beam, as will be described in more detail below. A response of the cell to the stimulus, i.e. to the forces, may be monitored. Different techniques may be used alone or in combination to monitor the response of the cell to the stimulus.

For illustration, digital holographic micro-interferometry (DHMI) may be performed. This technique is described for example in DE 10 2005 036326 A1. Using DHMI, the change in volume or surface shape of a cell or other biological object may be monitored, in response to a stimulus placed onto the cell. Alternatively or additionally, the device 1 may be configured to perform DHMI to monitor a rotation of the biological object when a torque is exerted thereon by the optical manipulator device 1. For illustration, the optical manipulator device 1 may exert a torque onto a biological object 8, 9 to cause the object 8, 9 to rotate. The rotation may be monitored using DHMI. The computing device 3 may establish a rotation speed from the data captured using DHMI. Based on the rotation speed, the computing device 3 may determined whether or not the biological object has been affected by an active ingredient to which the biological object has been exposed.

Alternatively or additionally, Raman spectroscopy may be performed. The Raman spectroscopy may be limited to predetermined frequency bands in order to allow data acquisition to be completed more rapidly. Using Raman spectroscopy, information on molecules comprised by the biological object may be obtained. Raman spectroscopy may be performed in a spatially resolved manner, so as to obtain information on changes in local molecule concentrations in response to a stimulus.

In use of the device 1, the computing device 3 may retrieve the data captured by DHMI and/or Raman spectroscopy. The computing device 3 may automatically process the data. For illustration, the computing device 3 may identify spectral peaks in a Raman spectrum and the associated resonance wavelengths. The computing device 3 may compare the resonance wavelengths to data in the database 5. If matching data is found in the database 5, information on the respective biological object retrieved from the database 5 may be output to a user. If no matching data is found in the database 5, the computing device 3 may allow a user to instruct the computing device 3 to write the data established by the computing device 3 into the database 5, in combination with additional information which may be input by the user for storing in the database 5.

The microscope arrangement 2 includes a laser 21. Light output by the laser 21 is directed towards the test channel 13. The beam output by the laser 21 may be directed towards reflecting surfaces 16 and 17 via a mirror 24 and a lens 26. The reflecting surfaces 16 and 17 define the measurement positions 18, 19 at which the biological objects are manipulated. As best seen in inset A in Fig. 1, additional non-optical manipulation elements 28 may be provided. For illustration, the manipulation elements 28 may include a solenoid or pair of solenoids to generate an alternating electromagnetic field to which biological objects 8, 9 are exposed at a measurement position. Effects of the magnetic field onto the biological object(s) may be measured using Raman spectroscopy and/or DHMI. In embodiments, the reflecting surface(s) may be planar, in which case the measurement locations may be defined more freely. The lens 26 may be the objective lens of a microscope.

Prior to being coupled into the beam path to the lens 26, the light output by the laser 21 is passed through a focus adjusting device 29 which is configured to adjust the focal position(s) of beams directed towards the reflecting surface(s) 16, 17 relative to the reflecting surface(s) 16, 17. The focus adjusting device 29 may include at least one pair of lenses. The pair of lenses may be in a telescope arrangement. An actuator may be provided to displace at least one of the lenses. Thereby, the focal position of the beam incident onto the reflecting surface(s) 16, 17 may be adjusted.

In preferred embodiments, the focus adjusting device 29 is controllable. The focus adjusting device 29 may be configured to adjust a position of a focal point of the beam incident onto the reflecting surface(s) 16, 17 in three orthogonal spatial directions. The focus adjusting device 29 may in particular be configured to control a position of the focus along the optical axis of the lens 26. The focus adjusting device 29 may be adjusted based on characteristics, in particular based on a focal length of lens 26. The position of the focal point and/or an opening angle of the light beam incident onto the reflecting surface(s) 16, 17 may be controlled based on the biological object to be manipulated. The position of the focal point of the light beam incident onto the reflecting surface(s) 16, 17 may be controlled such that the biological objects are trapped at a location spaced from the walls of the micro channel 13, and in particular at a location at or in proximity to a centre of the channel 13.

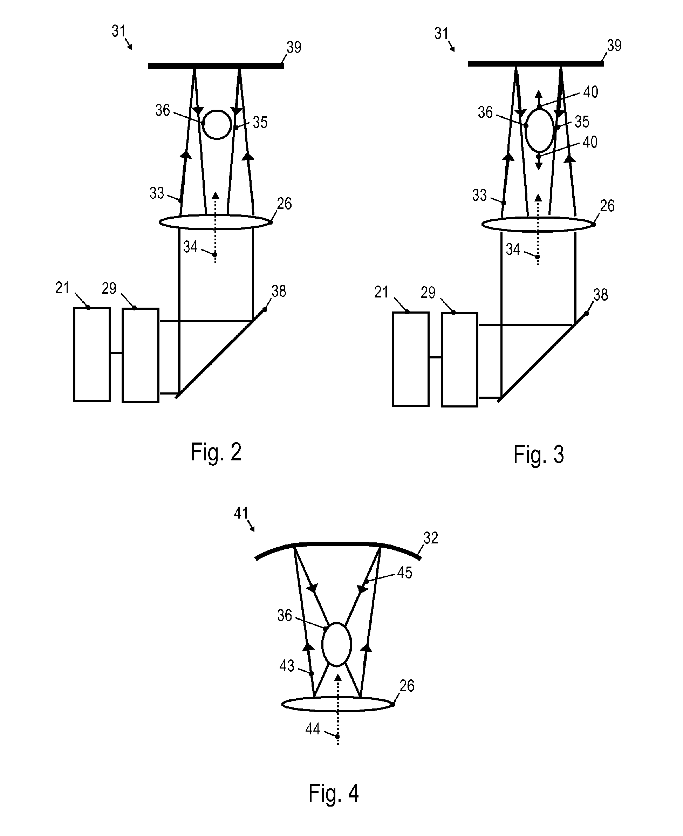

As will be described in more detail with reference to Figs. 2-14, the beam provided by the laser 21 which is incident on reflecting surfaces 16 and 17 forms a light field which can be controlled to manipulate the biological objects 8 and 9. For illustration, the power density of the laser beam may be controlled until the biological objects 8 and 9 start to deform or relax from a deformed state to another configuration. The computing device 3 may control the output power of the laser 21 via the interface 27 of the microscope arrangement 2. Thereby, the laser beam may be adjusted so as to effect deformation of the biological objects in the light field generated by the beam incident on the reflecting surfaces 16 and 17 and the reflected beams. Alternatively or additionally, the focal point of the beam incident onto the reflecting surface(s) 16, 17 may be moved as a function of time to effect deformation and/or rotation of the biological object.

The laser 21 may output light having a wavelength in the IR range. The light may in particular have a wavelength in the near-IR range of the frequency spectrum. As the light directed towards the reflecting surfaces 16 and 17 is not passed through an optical fibre, various laser modes may be utilized for generating the light field which deforms and/or rotates the biological object. The laser modes may be selected in accordance with the desired application. For illustration, TEM₁₀ or TEM₀₁ modes may be used to selectively deform biological objects or to exert a torque onto biological objects.

In the illustrated embodiment, the microscope arrangement 2 includes a Raman laser 22 and a Raman spectrometer 23. Under control of the computing device 3, Raman spectroscopy is performed on biological objects. Data captured by the Raman spectrometer 23 may be provided to the computing device 3. The computing device may output this information to the user via the user interface 6 or may automatically match the data to data already stored in the database 5. While a separate Raman laser 22 is shown in Fig. 1, the laser 21 may not only serve to generate the light field in which the biological objects are manipulated, but may also be used as excitation laser for Raman spectroscopy. In the latter case, the Raman spectrometer is repositioned accordingly as compared to the configuration shown in Fig. 1.

The excitation beam for performing Raman spectroscopy is passed through a further focus adjusting device 30. The further focus adjusting device 30 allows the Raman excitation beam to be selectively focussed onto one of the biological objects 8, 9. The further focus adjusting device 30 may be configured to adjust a focal position of the Raman excitation laser in three orthogonal spatial directions. The further focus adjusting device 30 may be configured to adjust a position of the focus of the Raman excitation beam along the optical axis of lens 26. The further focus adjusting device 30 may adjust the position of the focus based on characteristics, in particular based on a focal length of the lens 26.

While the focus adjusting device 29 for the manipulation beam and the further focus adjusting device 30 for the Raman beam are shown to be separate devices in Fig. 1, in further embodiments, the beam output by the laser 21 and the Raman beam may first be combined and may then be passed through one common focus adjusting device.

While the microscope arrangement 2 is illustrated to include a Raman spectrometer 23, the microscope arrangement 2 may additionally or alternatively include another device for capturing data which reflect the response of the biological object to the stimulus generated using the light field. For illustration, the microscope arrangement 2 may include a source of coherent radiation and optical components for directing a reference beam and a measurement beam to an image sensor, in order to perform DHMI, as described for example in DE 10 2005 036326 A1.

Manipulation of biological objects using the light field generated by the beam incident on a reflecting surface and the reflected beam, which is reflected off the reflecting surface, will be described in more detail with reference to Figs. 2-14. The intensity and/or focal positions of light beams may be adjusted to cause deformation or rotation of a biological object. In some embodiments, the light field may define a trapping potential having several local minima for a dielectric object. The relative position of the minima may be altered as a function of time. Elements or components which correspond, with regard to their construction or function, to elements or components shown in Fig. 1 are designated by the same reference numerals.

Fig. 2 is a schematic view of components of an optical manipulator device 31. The optical manipulator device 31 may include additional components, as has been described with reference to Fig. 1. The optical manipulator device 31 includes a reflecting surface 39. The reflecting surface 39 is shown to be planar. Alternatively, a concave surface may be used, so as to reflect the incident beam into a reflecting beam converging towards the biological object. The reflecting surface 39 may be axially symmetric about a symmetry axis which, in Fig. 2, lies in the drawing plane. If the reflecting surface is concave, it may have a cross-sectional shape which is one of spherical, parabolic, elliptic, or hyperbolic.

The optical manipulator device 31 includes a source of electromagnetic radiation configured as a laser 21 which provides an output beam. The laser may be, for example, a diode laser or a diode-pumped solid state laser. The output beam of the laser 21 is directed, via a focus adjusting device 29, mirror 38 and the lens 26, towards the reflecting surface 39. The focus adjusting device 29 and lens 26 focus the beam provided by the laser 21 into a converging beam 33, which is incident onto the reflecting surface 32. The incident beam 33 has a direction defined by the centre axis 34 of the beam cone.

A biological object 36 is positioned at a distance from the reflecting surface 39. The biological object 36 is a dielectric object. The incident laser beam 33 impinges on a first face of the biological object 36 which faces away from the reflecting surface 39. For most biological objects, such as cells, a significant portion of the power impinging on the first face of the biological object 36 will be transmitted through the biological object 36. The reflecting surface 39 reflects the incident laser beam 33 into a reflected beam 35. The biological object 36 is positioned such that not only the incident beam 33, but also the reflected beam 35 impinges onto the biological object. The reflected beam 35 impinges on the second face of the biological object, which is located towards the reflecting surface 39. The light field generated by the incident beam 33 and the reflected beam 35 may also create an optical trap potential, which positions the biological object 36 at a distance from the reflecting surface 36. Using the focus adjusting device 29, the object 36 may be positioned in all three spatial directions such that it is spaced from all walls of a micro channel of a microfluidic device. Using the focus adjusting device 29, a diameter of the beam at the location where the object 36 is positioned may be adjusted based on a diameter of the object 36. Alternatively, a trap potential for positioning the biological object 36 may be produced using a separate laser beam.

The light field generated by the incident beam 33 and the reflected beam 35 may exert forces and/or a torque onto the biological object. One effect which gives rise to forces at the surface of the biological object is radiation pressure. However, for many biological objects such as cells which have a low absorption and low reflection at their surface, other phenomena may be dominant. For illustration, the difference in momentum of the electromagnetic radiation on the exterior and in the interior of the object may give rise to a force acting onto the surface of the biological object. The momentum of the radiation exterior of the biological object is given by p=E·n_{M}/c, where E is the energy proportional to the electric field amplitude, n_{M} the refractive index of the medium surrounding the biological object, and c the velocity of light in vacuum. The momentum of the radiation interior of the biological object is given by p=E·nₒ/c, where no is the refractive index of the biological object. At the surface of the biological object, the difference in momentum gives rise to a pressure, and thus force, acting onto the surface of the biological object, which is proportional to the power density of the beam. The force may be such that it is directed outwardly of the biological object when nₒ>n_{M}.

Depending on the dielectric constant of the interior of the biological object and of the medium in which the biological object is suspended, the light field generated by the beam 33 incident onto the reflecting surface 39 and of the reflected beam 35 may give rise forces which are directed inwardly or outwardly of the cell. By increasing the power density of the beam, and thus the energy density of the light field at the surface of the biological object, the magnitude of the forces may be increased. In an exemplary embodiment, the power density of the laser beam may be increased in a ramp, either continuously or in a step wise fashion, until the biological objects deforms.

Fig. 3 illustrates the optical manipulator device 31 and the biological object 36 manipulated thereby after the power density of the laser beam has been increased sufficiently such that the biological object 36 deforms from a rest configuration to a deformed configuration. For illustration, a situation is shown in which the refractive indices of the medium surrounding the biological object 36 and of the biological object 36 are such that the light field creates forces directed outwardly of the biological object 36. The pair of forces 40 is directed to opposite directions and causes the biological object 36 to deform by extending along the axis of the incident beam.

It will be appreciated that the optical manipulator device 31 is configured such that, in a steady state, the pair of forces 40 will be equal in magnitude. A difference in magnitude of the forces will cause the biological object 36 to shift in the light field until both forces 40 have equal magnitude.

Various other configurations may be implemented to manipulate biological objects, as will be explained with reference to Figs. 4-6. These configurations may be implemented using componentry as has been explained for the optical manipulator device of Fig. 1. In Figs. 4-6, elements or features which correspond to elements or features explained with reference to one of Figs. 1-3, are designated by the same reference numerals.

Fig. 4 is a schematic view of components of an optical manipulator device 41. The optical manipulator device 41 may include additional components, as has been described with reference to Fig. 1. The optical manipulator device 41 includes a concave reflecting surface 32. The reflecting surface 32 may be axially symmetric about a symmetry axis which, in Fig. 4, lies in the drawing plane. The reflecting surface may have a cross-sectional shape which is one of spherical, parabolic, elliptic, or hyperbol ic.

The optical manipulator device 41 is configured such that the incident beam 43 is a divergent beam cone. A manipulation of the biological object 36 in the light field generated by the incident beam 43 and a reflected beam 45 may be performed by controlling the power density of the incident beam 43. In an exemplary embodiment, the power density of the incident beam 43 may be increased so as to cause a diameter of the biological object 43, taken along a propagation direction 44 of the incident beam 43, to increase.

Both in the embodiment of Fig. 3 and in the embodiment of Fig. 4, the opening angle of the incident beam cone may be selected such that the reflected beam has a predetermined diameter at a given distance from the reflecting surface. The given diameter may be selected as a function of the size of the biological object to be manipulated. Selecting the opening angle of the incident beam cone may be performed in operation of the manipulator device, without requiring components of the manipulator device to be physically replaced. For illustration, the focus adjusting device 29 may include a pair of lenses in a telescope arrangement, at least one of which is displaceable relative to the other one. The opening angle of the incident beam cone may then be adjusted by adjusting a distance between the lenses.

In further embodiments, the reflecting surface may be planar.

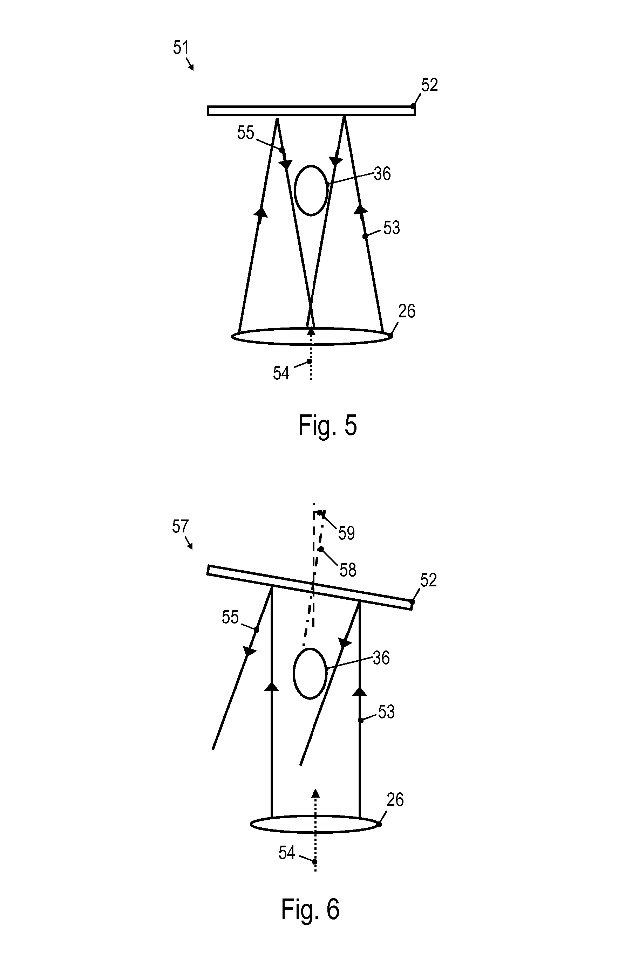

Fig. 5 is a schematic view of components of an optical manipulator device 51. The optical manipulator device 41 may include additional components, as has been described with reference to Fig. 1. The optical manipulator device 51 includes a planar reflecting surface 52.

The optical manipulator device 51 is configured such that the incident beam 53 is a collimated beam. A manipulation of the biological object 36 in the light field generated by the incident beam 53 and a reflected beam 55 may be performed by controlling the power density of the incident beam 53. In an exemplary embodiment, the power density of the incident beam 53 may be increased so as to cause a diameter of the biological object 53, taken along a propagation direction 54 of the incident beam 53, to increase.

Fig. 6 is a schematic view of components of an optical manipulator device 57 which is generally similar to the optical manipulator device 51 of Fig. 5. However, the axis of the incident beam 53 is arranged at an angle 59 relative to the normal 58 of the reflecting surface 52. Thereby, back reflection into the optical system may be decreased. If the beam 53 also serves as excitation beam for Raman spectroscopy, back reflection into a Raman spectrometer may be reduced.

In addition or alternatively to controlling the power density of the beam, other parameters may be controlled for manipulating a biological object. For illustration, the beam may include a plurality of components which are individually controllable. The different components may have different polarizations or different wavelengths. The different components may be controlled independently in order to generate optical potentials having plural optical traps, or similar.

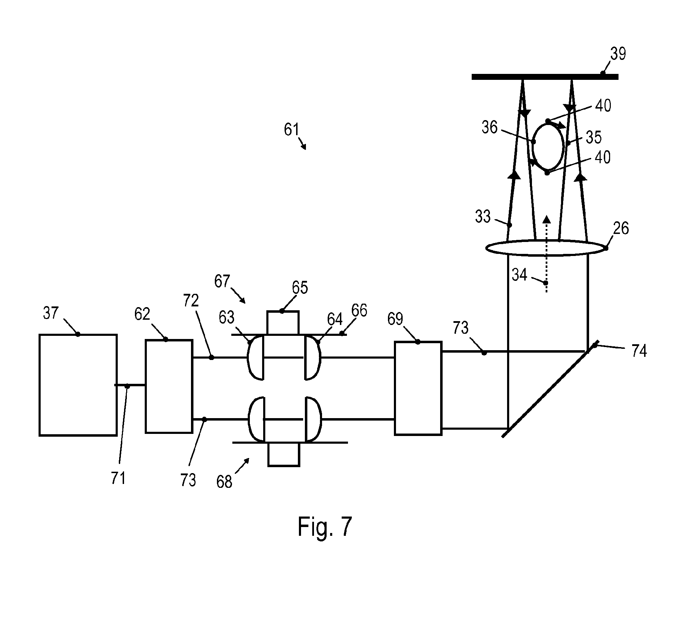

Fig. 7 is a schematic view of components of an optical manipulator device 61. Components or features which correspond, with regard to their configuration or construction, to components or features explained with reference to Figs. 1-6 are designated by the same reference numerals. The optical manipulator device 61 may include additional components, as has been described with reference to Fig. 1.

The optical manipulator device 61 includes a reflecting surface 39 which has a planar shape. The optical manipulator device 61 includes a source of electromagnetic radiation, which comprises the laser 37. The laser 37 is such that light output by the laser 37 has at least two different components, e.g., two different polarization components or two different wavelength components.

The optical manipulator device 61 includes an adjusting mechanism for separately and individually adjusting two components of the laser beam having different polarization. The adjusting mechanism includes a polarization splitter 62, an adjusting path 67 for adjusting a first polarization component, an adjusting path 68 for adjusting a second polarization component, and a beam combiner 69. The polarization splitter 62 may include, for example, a λ/2 plate and a polarizing beam splitter cube. For illustration rather than limitation, the adjusting paths 67 and 68 may respectively include optical components, such as lenses 63 and 64, and actuable components. The actuable components may include an electromechanical actuator 65, which may be coupled to the optical components via a mechanical coupling 66. For illustration rather than limitation, the adjusting paths 67 and 68 may respectively be configured to displace the associated polarization component, using displaceably mounted mirrors actuated by the electromechanical actuator 65 or using other adjustable elements. The actuator 65 may be configured to adjust a distance between lenses 63 and 64. The combiner 69 may combine the two polarization components.

In use of the optical manipulator device 61, the beam 71 output by the laser 37 is split into two polarization components 72 and 73. The first polarization component 72 is passed through the first adjusting path 67. The second polarization component 73 is passed through the second adjusting path 68. The two polarization components 72 and 73 may be adjusted such that, when the beam is directed towards the reflecting surface 39, the position of the two polarization components 72 and 73 is controlled in the two directions orthogonal to the axis 34. Further, in preferred embodiments, the adjusting mechanism may be configured to independently control the focal position of the light beams incident onto the reflecting surface 39 in respectively three orthogonal spatial directions. Adjusting the focal position may be performed based on an object size and/or based on optical properties of one or several lenses through which the incident beam is passed. The adjusting mechanism may in particular be configured to control, for each one of the polarization components, a distance of the focus of the associated beam from the reflecting surface 39.

The biological object 36 can be manipulated in a variety of ways. For illustration, by controlling the adjusting paths 67 and 68 as a function of time, a time-varying double-trap potential can be created. This potential may be controlled as a function of time such that the biological object 36 is rotated and/or deformed. As schematically indicated in Fig. 7, the adjusting paths 67 and 68 may be controlled as a function of time such that forces 40 exert a torque onto the biological object, which causes the biological object 36 to rotate. Rotation of the biological object may be monitored using DHMI. From the rotation speed, a computing device may automatically infer whether the biological object is affected by an active ingredient to which the object is exposed.

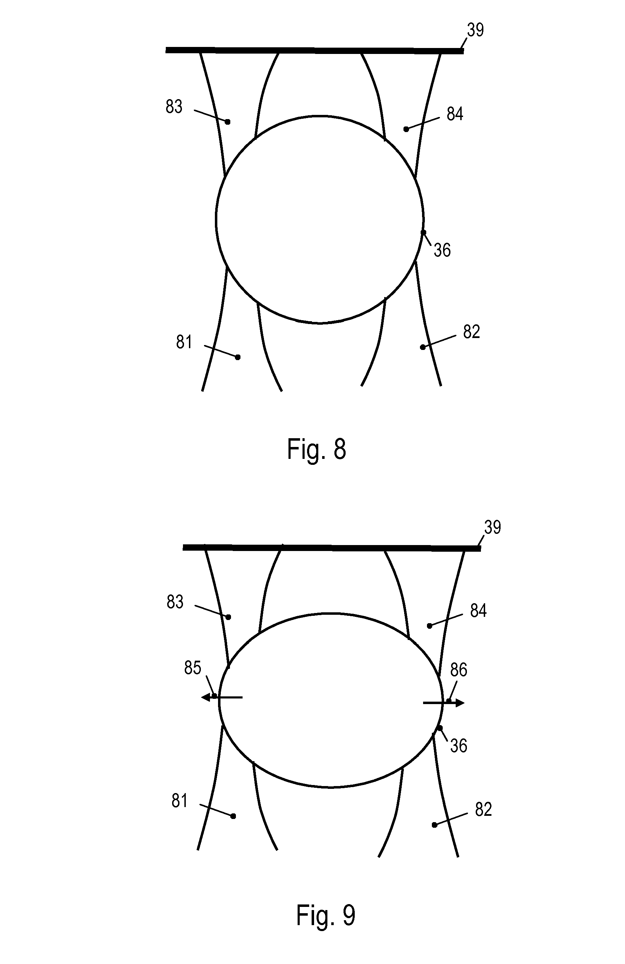

Fig. 8 and 9 illustrate operation of the optical manipulator device 61 when used to deform a biological object in one exemplary mode of operation.

A first component 81 of the incident beam and the associated first component 83 of the reflected beam form a first optical trap. A second component 82 of the incident beam and the associated second component 84 of the reflected beam form a second optical trap. The centres of the two traps are spaced by a distance which is smaller than a maximum diameter of the biological object 36, which is defined as the maximum distance between any pair of points on the surface of the biological object 36, which are located on an arbitrary line passing through the biological object 36.

As shown in Fig. 9, the incident first component 81 and second component 82 are controlled in a time-varying manner. The distance between the centres of the first optical trap and of the second optical trap is thereby adjusted as a function of time. Altering the distance between the centres of the optical traps may involve a simultaneous repositioning of the centres of both traps or a relocation of one of the first and second optical traps. The movement of the different components of the incident beam in a direction perpendicular to the direction of incidence gives rise to forces 85 and 86 of opposite direction, which act onto opposite sides of the biological object 36. While a movement in a direction perpendicular to the direction of incidence is illustrated in Figs. 8-9, the focal position of at least one of the beams corresponding to the different components may also be changed in a direction parallel to the propagation direction.

It will be appreciated that the optical manipulator device 61 also has different applications. For illustration, two biological objects may be manipulated in parallel using the optical manipulator device 61. To this end, a first biological object may be manipulated by the light field generated by the first polarization component in the incident beam and the associated first polarization component in the reflected beam. A second biological object may be manipulated by the light field generated by the second polarization component in the incident beam and the associated second polarization component in the reflected beam. Only one laser is required to perform this manipulation.

In methods and optical manipulator devices of embodiments, it is still possible, but no longer required to pass light through optical fibres for manipulation of objects. The methods and devices explained with any one of Figs. 1-9 can be readily applied to manipulate not only one, but plural biological objects. To this end, a spatial light modulator may be provided.

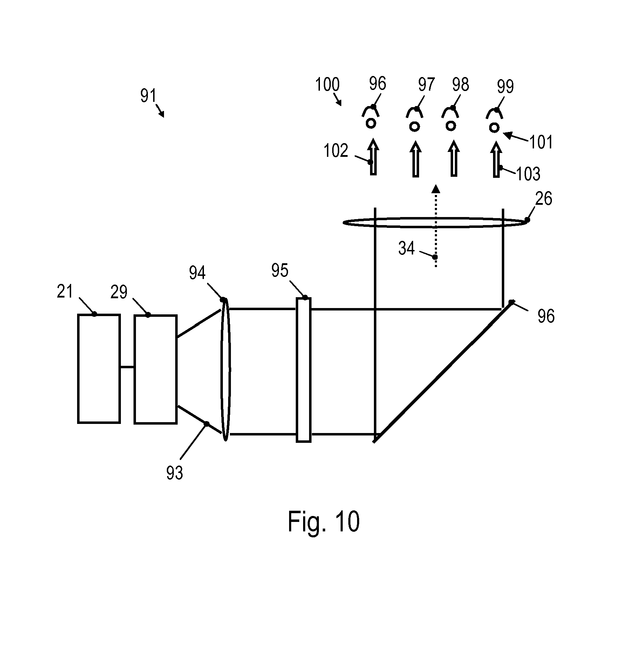

Fig. 10 is a schematic view of components of an optical manipulator device 91. The optical manipulator device 91 may include additional components, as has been described with reference to Fig. 1. For illustration, the optical manipulator device 91 may include a device for performing DHMI and/or a Raman spectrometer.

The optical manipulator device 91 includes an array 100 of reflecting surfaces 96-99. A plurality of biological objects 101 may be positioned so as to be spaced from the reflecting surfaces 96-99. Alternatively, one single planar reflecting surface may be provided.

The optical manipulator device 91 further includes a laser 21 and a focus adjusting device 29 as described with reference to Fig. 1. The laser 21 may output a laser light 93 having a wavelength in the IR, in particular in the near IR, spectral range. As has been explained above, not only the TEM₀₀, but also the TEM₁₀ or TEM₀₁ modes or other modes may be utilized to manipulate biological objects.

The optical manipulator device 91 includes a collimator lens 94 directing the laser light to a spatial light modulator 95. The spatial light modulator 95 may for example be a liquid crystal spatial light modulator. The spatial light modulator may also be arranged so as to be operative in reflection rather than transmission mode. The spatial light modulator 95 may be connected to a computing device, such as the computing device 3 explained with reference to Fig. 1. The computing device 3 may control the spatial light modulator 95 in a manner coordinated with the laser 21, with the focus adjusting device 29 and, if present, devices which are used to acquire data representing the response of the biological objects to a stimulus.

The spatial light modulator 95 may generate an intensity pattern, so that a plurality of beams 102, 103 are incident on the array 100 of reflecting surfaces 96-99. The beams incident on the array 100 of reflecting surfaces 96-99, in combination with each one of the associated reflected beams, creates a light field for manipulating a biological object.

In embodiments, the additional degrees of freedom afforded by the spatial light modulator 95 may also be utilized to dynamically manipulate biological objects. For illustration, the spatial light modulator 95 may be configured so as to direct at least two beams towards one of the reflecting surfaces 96-99. Each one of the beams and its associated reflected beam forms an optical trap. By controlling the spatial light modulator 95, the relative position between the centres of the two traps may be adjusted, so as to cause deformation and/or rotation of a biological object. Manipulation of the biological objects may then be attained in a manner similar to Figs. 7-9.

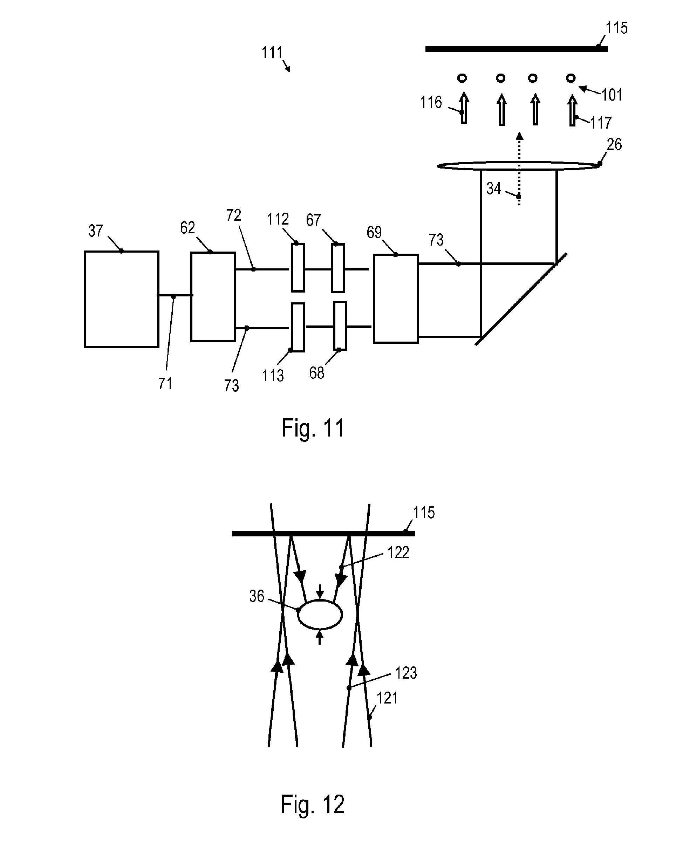

Additionally or alternatively, a spatial light modulator which forms a pattern of plural incident beams, as explained with reference to Fig. 10, may be combined with the individual control of different polarization components, as explained with reference to Figs. 7-9. This will be further illustrated with reference to Fig. 11.

Fig. 11 is a schematic representation of an optical manipulator device 111. Components or elements which correspond, with regard to their configuration or operation, to components or elements of the optical manipulator device 61 of Fig. 7 are designated with the same reference numerals.

The optical manipulator device 11 includes a reflecting surface 115 which has a planar shape. The optical manipulator device 111 includes a source of electromagnetic radiation, which comprises the laser 37. The laser 37 is such that light output thereby has two different components, e.g., two different polarization components or two different wavelength components.

The optical manipulator device 111 includes an adjusting mechanism with adjusting paths 67 and 68 for separately and selectively adjusting the two components of the laser beam, e.g., of two components having different polarization. The adjusting paths 67 and 68 may be configured as described with reference to Fig. 7. For illustration, each one of the adjusting paths 67 and 68 may include a pair of lenses and an actuator for controlling a relative position of the lenses of the pair. A first spatial light modulator 112 is provided to spatially modulate an intensity of the first component of laser light. A second spatial light modulator 113 is provided to spatially modulate an intensity of the second component of laser light. While the SLMs 112, 113 are illustrated as being arranged such that the first and second components is provided thereto prior to being passed through the adjusting paths 67 and 68, respectively, the SLMs may also be integrated into the adjusting paths 67 and 68 or may be provided downstream of the adjusting paths 67 and 68. Further, while two separate SLMs are shown in Fig. 11, only one SLM may be provided in another embodiment to spatially modulate the intensity of both the first and the second component.

In use of the optical manipulator device 111, the beam 71 output by the laser 37 is split into two polarization components 72 and 73. The first polarization component 72 is passed through the spatial light modulator 112 and the first adjusting path 67. The second polarization component 73 is passed through the second spatial light modulator 113 and the second adjusting path 68. The adjusting mechanism with the paths 67 and 68 may be configured to control, for each one of the polarization components, a distance of the focus of the associated beam from the reflecting surface 115. The adjusting mechanism with the paths 67 and 68 may be configured to control, for each one of the polarization components, an opening angle of the beam cone incident onto the reflecting surface 115. The spatial light modulators 112, 113 may be configured to individually superimpose an intensity modulation onto the two beams.

Using the optical manipulator device 111, a plurality 101 of biological objects may be manipulated in parallel, as will be described with reference to Figs. 12-14. While only one biological object 36 is respectively shown in Figs. 12-14, it will be appreciated that the spatial light modulators 112, 113 allow the beam configurations illustrated in Figs. 12-14 to be generated for several biological objects in parallel.

Fig. 12 shows a biological object positioned at a distance from the reflecting surface 115. In the illustrated implementation, the reflecting surface 115 is configured such that it reflects a majority of the power flux of a first component of laser light, but transmits a majority of the power flux of a second component. For illustration, the reflecting surface 115 may be a polarization- or wavelength-dependent reflector or may be a mirror arranged at the Brewster angle.

A beam 121 of the first component is incident onto the reflecting surface 115 in a convergent beam cone. The surface 115 reflects the beam of the first light components into a reflected beam 122. The opening angle of the convergent beam cone 121 may be set using the adjusting device. The opening angle may be set based on the size of the biological object. The light field generated by the superposition of the incident beam 121 and the reflected beam 122 may be adjusted to cause a deformation of the biological object 36.

A beam 123 of the second component is incident onto the reflecting surface 115 in a divergent beam cone. The beam 123 is not, or is only partially, reflected at the reflecting surface 115. The majority of the power flux is transmitted through the reflecting surface 115.

By superimposing the divergent beam 123 of the second light component onto the light field generated by the superposition of the incident beam 121 and the reflected beam 122 of the first light component, deformation of the biological object may be controlled to a greater degree. For illustration, the divergent beam 123 may be used to exert a force onto a face of the biological object 36 even when the power density of the beams 122, 123 of the first light component is still too low to cause, by itself, a desired deformation. Further, the divergent beam 123 may be used to shift the biological object in the optical potential generated by the superposition of the incident beam 121 and the reflected beam 122 of the first light component. By adjusting the power density of the incident beam 121 of the first light component, the forces exerted onto the biological object 36 may be varied. Similarly, by laterally displacing the incident beam 121 of the first component and the incident beam 123 of the second component, the object 36 may be manipulated. The lateral positions of the two incident beam cones 121 and 123 may be adjusted using, for example, the adjusting paths 67 and 68 of the optical manipulator device 111 of Fig. 11. Alternatively or additionally, the opening angles of the two incident beam cones 121, 122 may be adjusted.

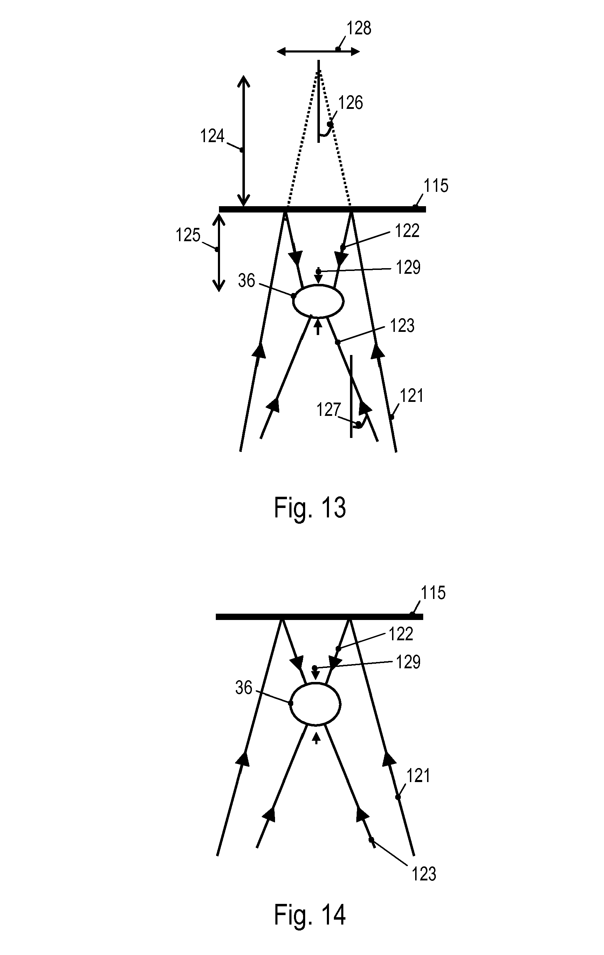

Fig. 13 illustrates a biological object positioned at a distance from the reflecting surface 115. In the illustrated implementation, the reflecting surface 115 may, but does not need to be configured such that it reflects a majority of the power flux of a first component of laser light, but transmits a majority of the power flux of a second component.

A first component of a light beam is incident onto the reflecting surface 115 in a convergent beam cone 121. The surface 115 reflects the beam of the first light components into a reflected beam 122. The opening angle 126 of the convergent beam cone 121 may be set using the adjusting device. The opening angle may be set based on the size of the biological object.

A beam 123 of the second component is incident onto the reflecting surface 115 in a convergent beam cone. The opening angle 127 of the convergent beam cone 123 may be set using the adjusting device.

The opening angle 127 of the beam cone 123 may be adjusted so as to be different from the opening angle 126 of the beam cone 121. The focal points of the two beam cones may be set to be offset relative to each other. More specifically, in the illustrated implementation, the beam cones 121 and 123 are configured such that the beam cone 121 has a virtual focal point at a distance 124 from the reflecting surface 115. The beam cone 121 has a focal point at a distance 125 from the reflecting surface 115. The distances 124 and 125 are different from each other. Thereby, a light field is generated which has focal points offset relative to each other. It will be noted that the focal points are offset along an axis which extends along the propagation direction of the incident beams, e.g., along a microscope optical axis.

In Fig. 13, the beam cone 121 is focused to a virtual focal point located on a side of the reflecting surface 115 which is opposite to the side on which the focal point of the beam cone 122 is located. In further implementations, both beam cones 121, 122 may be focused so that they have a real focal point located on the incident side of the reflecting surface 115, with the distances of the two focal points from the reflecting surface 115 being different from each other. In further implementations, both beam cones 121, 122 may be focused so that they have a virtual focal point located on the side of the reflecting surface 115 facing away from the side at which the beams are incident onto the surface 115, with the distances of the two focal points from the reflecting surface 115 being different from each other.

The distance between the focal points may be adjusted to cause deformation of the biological object. This can be attained by altering the distance of the focal points of the two beam cones 121, 123 from the reflecting surface 115.

For illustration, Fig. 14 shows a configuration in which the opening angle 126 of the beam cone 121 of the first component has been increased as compared to the configuration illustrated in Fig. 13. The magnitude of the forces 129 acting onto opposite faces of the biological object is thereby changed, causing the biological object 36 to be deformed.

In each one of the embodiments described with reference to Figs. 1-14, the beam of electromagnetic radiation incident onto the reflecting surface may be adjusted such that the forces acting on the biological object change in a cyclic, in particular in a periodic, manner.

For illustration, in each one of the embodiments described with reference to Figs. 1-14 , the power of the beam of electromagnetic radiation may be modulated. The power modulation may be repeated with a predefined periodicity. Thereby, the forces acting onto the biological object may be caused to vary in a periodic manner.

Alternatively or additionally, in each one of the embodiments described with reference to Figs. 1-14, the location of the focal point of the beam incident onto the reflecting surface or the opening angle of the incident beam cone may be modulated. For illustration, the focal point of the incident beam may be made to reciprocate between two locations. The focal point of the incident beam may be displaced periodically. Motion of the focal point may be coordinated with pulses of the power density.

By controlling the laser beam such that the forces acting on the biological object change in a cyclic, in particular in a periodic, manner, a stimulus is placed on the object. The stimulus may allow one to explore, for example, mechanical resonance frequencies of the outer shell of the biological object. For an object positioned in a channel of a microfluidic device, fluid resistance causes additional forces to act onto the biological object.

In each one of the embodiments, the reflecting surface may have dichroic properties. The reflecting surface may be configured such that an observation beam can pass therethrough. Examples for such observation beams include an object beam of a DHMI or visible light, for example for an electronic image sensor, such as a CCD.

While exemplary embodiments have been described with reference to the drawings, modifications and alterations may be implemented in other embodiments. For illustration, while some embodiments have been described in the context of a microfluidic device, the methods and devices are not limited to manipulating cells in a microfluidic device. While, in some of the embodiments, the beam of electromagnetic radiation has a wavelength in the IR spectral range, other wavelengths may be used in other embodiments. While, in some of the embodiments, DHMI or Raman spectroscopy is performed to monitor a response of a biological object to a stimulus, other monitoring techniques may be employed in other embodiments. While some embodiments have been described in the context of cell characterization and sorting, the methods and devices are not limited to these applications.

## Claims

1. A method of manipulating a biological object (8, 9; 36), comprising:
positioning said biological object (8, 9; 36) at a distance from a reflecting surface (16, 17; 39; 52; 96-99; 115);
directing a beam (33; 43; 53; 102; 121) of electromagnetic radiation towards said reflecting surface (16, 17; 39; 52; 96-99; 115) such that said beam (33; 43; 53; 102; 121) impinges on a first face of said biological object (8, 9; 36) and that at least a portion of said beam (33; 43; 53; 102; 121) is reflected by said reflecting surface (16, 17; 39; 52; 96-99; 115) into a reflected beam (35; 45; 55; 122) which directly impinges on a second face of said biological object (8, 9; 36); and
adjusting said beam (33; 43; 53; 102; 121) directed towards said reflecting surface (16, 17; 39; 52; 96-99; 115) to effect a deformation or rotation of said biological object (8, 9; 36).

2. The method of claim 1,
wherein said adjusting said beam (33; 43; 53; 102; 121) comprises adjusting a power density of said beam (33; 43; 53; 102; 121).

3. The method of claim 2,
wherein said biological object (8, 9; 36) has a maximum diameter along an axis (34; 44; 54) of said beam (33; 43; 53; 102; 121) when said beam (33; 43; 53; 102) has a first power density, and said power density of said beam (33; 43; 53; 102) is increased to a second power density greater than said first power density to change said maximum diameter along said axis (34; 44; 54).

4. The method of any one of the preceding claims,
wherein an opening angle of said beam (33; 43; 53; 102; 121) is controlled based on a size of said biological object (8, 9; 36).

5. The method of any one of the preceding claims, comprising
passing said beam (71) through a polarization splitter (62),
wherein said adjusting said beam (33) comprises independently controlling a first polarization component (72; 81) and a second polarization component (73; 82) of said beam (33), said second polarization component (73; 82) being different from said first polarization component (72; 81).

6. The method of claim 5,
wherein said first polarization component (81) in said beam directed towards said reflecting surface (39) and said first polarization component (83) in said reflected beam form a first optical trap,
wherein said second polarization component (82) in said beam directed towards said reflecting surface (39) and said second polarization component (84) in said reflected beam form a second optical trap, and
wherein said first and second polarization components (81, 82) are controlled such that a relative position between a centre of said first optical trap and a centre of said second optical trap is adjusted as a function of time,
wherein said first and second polarization components (81, 82) are controlled such that said biological object (36) remains positioned in both said first optical trap and said second optical trap while said relative position is adjusted.

7. The method of any one of the preceding claims,
wherein said beam (33; 43; 53; 102; 121) is adjusted periodically as a function of time.

8. The method of any one of the preceding claims,
wherein said reflecting surface (16, 17; 39; 52; 96-99; 115) is integrated into a microfluidic device (11) defining at least one micro channel (12-14) and said biological object (8, 9; 36) is immersed in a solution contained within said at least one micro channel (12-14),
wherein a refractive index of said solution is smaller than a refractive index of an interior of said biological object (8, 9; 36).

9. The method of any one of the preceding claims,
wherein said reflecting surface (52) has a symmetry axis (58) extending perpendicularly to at least a portion of said reflecting surface (52), and said beam (53) directed towards said reflecting surface (52) has an axis (54) arranged at an angle (59) relative to said symmetry axis (58).

10. The method of any one of the preceding claims,
wherein said reflecting surface (16, 17; 96-99) is curved to focus said reflected beam onto said biological object (8, 9; 36).

11. The method of any one of the preceding claims,
wherein an output (93) of a laser (21; 37) is provided to a spatial light modulator (94; 112, 113) to generate said beam (102) and a plurality of further beams (103), wherein the plurality of further beams (103) are directed towards said reflecting surface (115) or to a plurality of further reflecting surfaces (97-99) to manipulate a plurality of biological objects (101).

12. The method of any one of the preceding claims,
wherein said beam is directed towards said reflecting surface (16, 17; 39; 52; 96-99; 115) through an objective lens (26) of a microscope.

13. The method of any one of the preceding claims, comprising
monitoring a response of said biological object (8, 9; 36) to said adjusting said beam (33; 43; 53; 102) using digital holographic micro-interferometry and/or Raman spectroscopy.

14. An optical manipulator device for manipulating a biological object (8, 9; 36), comprising:
a reflecting surface (16, 17; 39; 52; 96-99; 115),
a source of electromagnetic radiation (21, 24, 26, 29; 21, 26, 29; 37, 62, 67-69; 21, 29, 94, 95; 37, 62, 49, 112, 113) configured to direct said beam (33; 43; 53; 102) of electromagnetic radiation towards said reflecting surface (16, 17; 39; 52; 96-99; 115) such that said beam (33; 43; 53; 102) impinges on a first face of said biological object (8, 9; 36) when said biological object (8, 9; 36) is positioned at a distance from said reflecting surface (16, 17; 39; 52; 96-99; 115) and that at least a portion of said beam (33; 43; 53; 102) is reflected by said reflecting surface (16, 17; 32; 52; 96-99) into a reflected beam (35; 45; 55) directly impinging on a second face of said biological object (8, 9; 36), and
a control device (2) coupled to said source of electromagnetic radiation (21, 24, 26, 29; 21, 26, 29; 37, 62, 67-69; 21, 29, 94, 95; 37, 62, 49, 112, 113) and configured to control said source of electromagnetic radiation so as to adjust said beam (33; 43; 53; 102) to cause deformation or rotation of said biological object (8, 9; 36).

15. The optical manipulator device of claim 14,
configured to perform the method of any one of claims 1-13.
